# EUROPÄISCHE PATENTSCHRIFT

(11) **EP 2 279 462 B1**
(45) Veröffentlichungstag und Bekanntmachung des Hinweises auf die Patenterteilung: **08.07.2015**
(21) Anmeldenummer: 09745680.0
(22) Anmeldetag: 06.05.2009
(51) Int. Cl.: G05B 19/042

(54) **VERFAHREN UND ANORDNUNG ZUR STEUERUNG EINER FERTIGUNGSLINIE**
METHOD AND ARRANGEMENT FOR CONTROLLING A PRODUCTION LINE
PROCÉDÉ ET DISPOSITIF POUR COMMANDER UNE CHAÎNE DE PRODUCTION

(30) Priorität: 14.05.2008 DE 102008001777
(43) Veröffentlichungstag der Anmeldung: 02.02.2011
(73) Patentinhaber: Robert Bosch GmbH, 70442 Stuttgart (DE)
(72) Erfinder: STRINK, Peter, 71638 Ludwigsburg (DE); HAUG, Karsten, 70372 Stuttgart (DE)
(86) Internationale Anmeldenummer: PCT/EP2009/055485
(87) Internationale Veröffentlichungsnummer: WO 2009/138347

(56) Entgegenhaltungen:
- US-A1- 2005 131 552
- US-A1- 2006 175 553
- US-A1- 2007 050 093

## Beschreibung

### Stand der Technik

Die Erfindung betrifft ein Verfahren und eine Anordnung zur Steuerung einer Fertigungslinie mit Bearbeitungseinheiten oder Maschinen, zum Beispiel bei der Herstellung von Komponenten für Kraftfahrzeuge mit entsprechenden Maschinen, nach der Gattung des Verfahrensanspruchs 1 und der Anordnung nach Anspruch 6 ff. sowie ein Computerprogrammprodukt. Eine solche Fertigungslinie kann in einer Fertigungsanlage aus miteinander verketteten Bearbeitungseinheiten oder Maschinen bestehen; in einem Sonderfall kann die Fertigungslinie jedoch auch nur aus einer Bearbeitungseinheit oder Maschine bestehen.

Es ist an sich zum Beispiel schon aus der DE 22 32 715 A als Stand der Technik bekannt, dass Einrichtungen zum Steuern von Arbeitsmaschinen zur automatischen Bearbeitung von Werkstücken mittels einer elektronischen Datenverarbeitungsanlage nach einem vorgegebenen Arbeitsprogramm gesteuert werden. In der DE 697 32 488 T2 ist auch schon beschrieben, dass hierfür ein Prozesssteuerungsnetzwerk vorhanden ist, in dem entsprechende Feldgeräte über einen sogenannten Feldbus gesteuert werden.

Bei den eingangs erwähnten Fertigungslinien ist der Einsatz von Energie-Einspar-Verfahren und ein umweltfreundlicher, insbesondere ein nur wenig CO₂ -Emissionen verursachender Betrieb, eine häufige Forderung. In Freischichten, Pausen und sonstigen Unterbrechungen in der Fertigungslinie müssen dabei in der Regel sämtliche Systeme der Fertigungslinie voll betriebsbereit bleiben, um am Ende des Linienstillstandes sofort wieder fertigungsbereit zu sein. Dabei wird in der Regel eine große Energiemenge relativ nutzlos vergeudet.

Ein einfaches Abschalten der Fertigungslinie ist oft auch keine sinnvolle Lösung, da ein erneutes Hochfahren häufig komplex ist und viele Einzelschritte umfasst, die in der richtigen Reihenfolge mit den richtigen Parametern durchgeführt werden müssen. Im Gegensatz zum laufenden Automatikbetrieb ist dabei der Hochlauf auch nur selten automatisiert.

Für sich gesehen ist es beispielsweise aus der Kraftfahrzeugtechnik bekannt, dass beim Betrieb eines Kraftfahrzeuges sogenannte Start-Stopp-Automatiken verwendet werden, die in vorgegebener Weise ein optimales und bedienerfreundliches Stillsetzen und Wiederanfahren der wesentlichen KFZ-Funktionen, vor allem ein Starten und Stoppen des Verbrennungsmotors, ermöglichen.

Da auch beim Betrieb von Fertigungslinien, insbesondere für die CO₂-Emission und allgemein für den Energieverbrauch, die Einhaltung von bestimmten Grenzwerten, in vergleichbarer Weise wie sie heute schon für Kraftfahrzeuge gelten, zu erwarten sind, sollte nach Lösungen für ein sinnvolles Start-Stopp-Verfahren auch hier gesucht werden. Es ist heute keine Technologie vorhanden, die das Ab- und Anschalten einer ganzen Fertigungslinie beispielsweise auf Knopfdruck ermöglicht, da im Detail sowohl die Steuerungstechnik als auch die richtige Architektur der Energieversorgung oder Medienversorgung fehlt.

Aus der US 2007/0050093 A1 ist ein Energieversorgungssystem bekannt. Die US 2006/0175553 A1 offenbart ein Verfahren und ein System zur Steuerung einer Einrichtung zur Halbleiterproduktion.

### Offenbarung der Erfindung

Die Erfindung geht von einem Verfahren zur Steuerung einer Fertigungslinie mit in der Regel einer Vielzahl von Bearbeitungseinheiten oder Maschinen aus, die über eine Master-Steuerung mit von einem Produktionsplanungssystem bereitgestellten Daten gesteuert werden. Erfindungsgemäß erfährt dabei jede Maschine zusätzlich zu einer Maschinensteuerung in vorteilhafter Weise auch eine Energiesteuerung, die von einer Master-Energie-Steuerung als Bestandteil der Master-Steuerung mit Daten versorgt wird.

Besonders vorteilhaft ist die Erfindung, wenn die Master-Steuerung mit einer Master-Maschinen-Steuerung versehen ist, die um Funktionen zum Start und Stopp der Fertigungslinie derart erweitert ist, dass ein aktueller Produktionsvorgang der Fertigungslinie soweit zu Ende geführt wird, dass ein automatischer Wiederanlauf nach einem Stillstand der Fertigungslinie durchführbar ist. Weiterhin ist in vorteilhafter Weise die Master-Energie-Steuerung mit Funktionen zum Start und Stopp der Fertigungslinie so ausgebildet, dass die Energie für die einzelnen Maschinen definiert hoch - und heruntergefahren wird, sodass besonders vorteilhaft ein automatischer Wiederanlauf nach einem Stillstand der Fertigungslinie durchführbar ist.

Die Master-Maschinen-Steuerung und/oder die Master-Energie-Steuerung wird dabei von einer Start-Stopp-Steuerung gesteuert, wobei in der Start-Stopp-Steuerung alle Parameter für einen energieeffizienten Betrieb der Fertigungslinie hinsichtlich der Abfolge zwischen einer Energie- und Funktionsan- oder Funktionsabschaltung der Maschinen hinterlegt sind. Die Master-Steuerung und insbesondere die Start-Stopp-Steuerung kann auf einfache Weise von einem Timer gesteuert werden und es ist ein Start-Stopp-Planer vorhanden, der von dem Produktionsplanungssystem die Daten zum Betrieb der Fertigungslinie erhält und aus den Pausenzeiten eine Ab- und Anschaltstrategie ermittelt. Im Start-Stopp-Planer kann dazu auf einfache Weise eine Tabelle hinterlegt werden, die für die Pausen länge zwischen dem Ab- und Anschalten der Maschinen der Fertigungslinie eine entsprechende Makrofunktion der Start-Stopp-Automatik enthält.

Bei einer vorteilhaften Anordnung zur Durchführung eines zuvor beschriebenen Verfahrens sind die Energie-Steuerungen zur Steuerung von Medien, insbesondere Kühl- und/oder Schmiermittel und Energie, insbesondere Druckluft und/oder Hydraulikdruck, ausgebildet. Zur Steuerung der Medien oder der Energie können dabei Absperrventile und/oder Regelbaugruppen oder vergleichbare Bauelemente angewendet werden.

Eine vorteilhafte Datenübertragung zwischen zumindest Teilen der zuvor beschriebenen Bausteine zur Steuerung der Maschinen kann über einen an sich bekannten Feldbus oder über Ethernetverbindung durchgeführt werden. Dazu kann ein Computerprogrammprodukt gespeichert auf einem computerverwendbaren Medium verwendet werden, das computerlesbare Programmmittel umfasst, welche bei Ausführung des Computerprogrammprodukts auf einem Mikroprozessor mit zugehörigen Speichermitteln oder auf einem Computer diesen zur Durchführung eines zuvor beschriebenen Verfahrens oder zum Betrieb einer der Anordnungen veranlassen.

Zusammenfassend ist somit festzustellen, dass mit der Erfindung eine Fertigungslinie mit einer neuen zentralen Steuerung vorgesehen werden kann, die ein definiertes und schnellstmögliches Hoch- und Runterfahren der Fertigungslinie ermöglicht, wobei diese Steuerung im Folgenden als Start-Stopp-Steuerung bezeichnet wird. Anstelle der herkömmlichen zentralen Steuerung ist es prinzipiell auch möglich, die Funktionen der zentralen Steuerung auch auf eine dezentrale Steuerung abzubilden.

Die Start-Stopp-Steuerung ist, wie erwähnt, mit den Einzelsteuerungen der Fertigungslinie über Feldbusse oder Ethernet vernetzt und stellt gegenüber den Einzelsteuerungen den Master dar.

Die beschriebene Fertigungslinie verfügt über mehrere sogenannte Energie-Backbones zu den Energiesteuerungen. Diese sind z. B. für die Energien/Medien, insbesondere elektrische Energie, Druckluft, Hydrauliknetz, Kühlflüssigkeiten, Heizkreisläufe usw., vorhanden. Jeder Energie-Backbone verfügt über eine eigene Steuerung und eine geeignete Aktorik und eventuell auch Sensorik. Die Aktorik besteht im Wesentlichen aus ansteuerbaren Ventilen, mit denen die Energie für bestimmte Segmente abgestellt werden kann und/oder aus ansteuerbaren Aggregaten, die abgeschaltet oder in einen energieverbrauchsoptimierten Zustand geschaltet werden können. Die Start-Stopp-Steuerung stellt auch den Master für die Energie-Backbone-Steuerungen dar und ist mit diesen über gängige zuvor beschrieben Kommunikationsmittel vernetzt. Alternativ kann eine Steuerung auch mehrere Energie-Backbones steuern oder diese Funktion sogar in die Start-Stopp-Steuerung integriert sein.

Die Energie/Medienversorgung einer Fertigungslinie ist gemäß der Erfindung so organisiert, dass sie für jedes Energie/Medium mindestens ein eigenes Segment enthält, sodass sämtliche Energie- oder Medienversorgungen einer Fertigungslinie isoliert abgeschaltet werden können, ohne den Rest der Fertigung zu berühren.

Es sind hierbei auch dezentrale Strukturen bzw. gekapselte Bereiche denkbar, sodass eine Fertigungslinie auch aus Unterbereichen bestehen kann, die von der Struktur her wieder ähnlich aussehen.

Die Start-Stopp-Steuerung enthält nun beispielsweise eine Konfiguration, die die Reihenfolge enthält, mit der die Linie über die Einzelsteuerungen hoch- und runtergefahren wird. Neben der Reihenfolge ist außerdem abgelegt, wie lang das Hoch- und Runterfahren der einzelnen Anlagenteile und der Energie/Mediensegmente benötigt. Die Reihenfolge ist ferner so gewählt, dass keine Fehlermeldungen beim Runter- und Hochfahren generiert werden, die einen späteren Betrieb verhindern.

Die erfindungsgemäße Konfiguration kann somit im Wesentlichen zwei Unter-Konfigurationen enthalten, die verschiedene Betriebsmodi berücksichtigen. Zum einen den Modus "Full-Auto-Start": Diese Konfiguration ermöglicht ein Runter-/Hochfahren ohne jegliche Bedienerunterstützung. Sie eignet sich auch für kurze Stillstandszeiten.

Zum anderen den Modus "Semi-Auto-Start": Hier sind Bedienereingriffe beim Runter-/Hochfahren erforderlich, z. B. für das Referenzieren von Robotern oder die Zuführung von Teilen. Diese Konfiguration eignet sich nur für längere Stillstandszeiten, z. B. während Freischichten in der Nacht oder am Wochenende.

Die Start-Stopp-Steuerung enthält ferner eine Timer-Funktion, mit der eingestellt werden kann, wann die Anlage wieder betriebsbereit sein soll. Die Timerfunktion sorgt dann dafür, dass unter Berücksichtigung der An- und Abschaltzeiten mit dem Hochfahren der Anlage genau so begonnen wird, dass sie rechtzeitig, z. B. zum Schichtbeginn, wieder voll verfügbar ist. Die Start-Stopp-Steuerung überprüft ferner vor dem Herunterfahren, ob bestimmte Anlagenteile gar nicht heruntergefahren werden dürfen, da durch zu lange Ausschalt-Einschaltzeiten sonst der Anlagenteil nicht rechtzeitig verfügbar ist zum nächsten geplanten Produktionsbeginn.

Die Start-Stopp-Steuerung kann ferner auch eine sogenannte "Restwärme-Funktion" enthalten, die Energien/Medien schon vor dem eigentlichen Herunterfahren abschaltet, wenn diese so große Zeitkonstanten aufweisen, dass für die verbleibende Restproduktionszeit noch ausreichend Energie vorhanden ist.

Die Energie/Medien-Backbones sind dabei vorteilhaft so organisiert, dass ein Abschalten einzelner Segmente auch dazu führt, dass der Energieverbrauch reduziert ist und nicht nur die Verlustenergie ansteigt. Alle beschriebenen Steuer-Funktionen sind als Software-Module auf heute bereits verfügbaren speicherprogrammierbaren Steuerungen (SPS) realisierbar.

### Kurze Beschreibung der Zeichnung

Die Erfindung wird nachfolgend anhand des in der Figur der Zeichnung gezeigten Ausführungsbeispiels erläutert. Dabei zeigt:

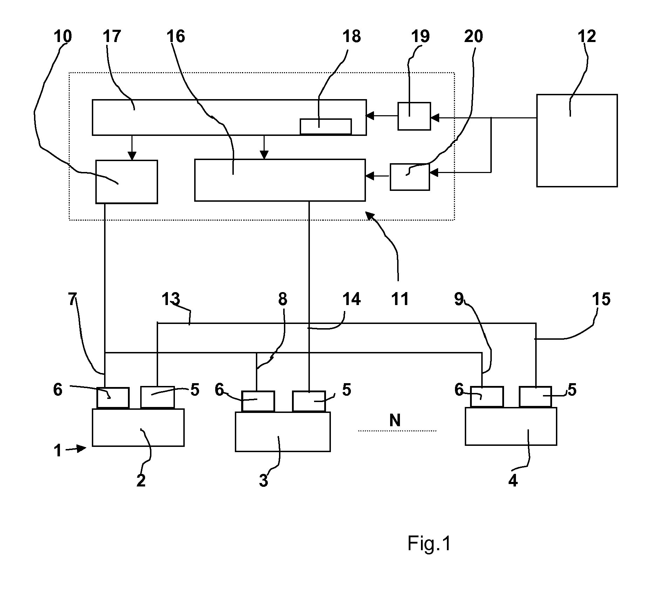

- Figur 1: ein schematisches Blockschaltbild einer Steuerung einer Fertigungslinie mit einer Start-Stopp-Automatik.

### Ausführungsform der Erfindung

Aus Figur 1 ist zu entnehmen, wie eine erfindungsgemäße Start-Stopp-Automatik in eine Fertigungslinie 1 integriert wird, die hier aus N einzelnen Maschinen 2,3,4 gebildet ist. Jede Maschine 2,3,4 verfügt über eine Maschinensteuerung 5 (SPS oder NC). Diese Maschinensteuerung 5 enthält jeweils Software- und/oder Hardware-Steuerelemente zum sicheren Hoch- und Herunterfahren der einzelnen Maschinen 2,3,4 als sogenannte Start-Stopp-Maschinenfunktionen. Diese sorgen dafür, dass der aktuelle Maschinenvorgang soweit zu Ende geführt wird, sodass ein automatischer Wiederanlauf nach einem Stillstand ohne manuelle Eingriffe möglich ist. Diese Maschinensteuerung 5 sorgt also dafür, dass der Fertigungsablauf der einzelnen Maschinen 2,3,4 definiert hoch- und heruntergefahren wird, sodass kein manueller Eingriff erforderlich ist und sich die Maschinen 2,3,4 hinsichtlich ihres Betriebszustandes immer in einem definierten, bekannten und reversiblen Zustand befinden.

Zusätzlich verfügt jede Maschine 2,3,4 oder ein Cluster von Maschinen 2,3,4 über eine Energiesteuerung 6, mit der die Medien- und Energieversorgung für jede Maschine 2,3,4 individuell geregelt wird. Als Medien kommen hierbei beispielsweise Kühlmittel oder Schmiermittel und als Energie zum Beispiel Druckluft oder Hydraulikdruck in Betracht. Konkret kann es sich bei der Steuerung der Medien- und Energieversorgung beispielsweise um Absperrventile zu einem übergeordneten zentralen Energie-Netz oder um Regelbaugruppen, die eine Anpassung der lokalen Energie-Bereitstellung regeln, z. B. die Drehzahlregelung für eine lokale Hydraulikpumpe zur Hydraulikversorgung der Maschine, handeln. Diese Energiesteuerung 6 sorgt somit dafür, dass die Energieversorgung definiert an- und abgeschaltet wird, sodass kein manueller Eingriff erforderlich ist und sich die Maschinen 2,3,4 energiemäßig immer in einem definierten, bekannten und reversiblen Zustand befinden.

Die Energiesteuerungen 6 der einzelnen Maschinen 2,3,4 sind über Energie-Backbones 7,8,9 mit einer Master-Energie-Steuerung 10 als Bestandteil einer Master-Steuerung 11 datentechnisch verbunden, wobei hier die Protokolle einer an sich bekannten Vernetzung klassischer Maschinensteuerungen Verwendung finden können, also z. B. klassische Feldbusse, insbesondere Profibus-DP, Ethernet-Feldbusse, zum Beispiel Sercos III, oder Ethernetprotokolle (TCP-IP). Die Bündelung der Energie-Backbones 7,8,9 erlauben die Berücksichtigung von Effekten der einzelnen Energiesteuerungen auf zentrale Netze und Rückwirkungen verschiedener Medien, die für jeweils benachbarte Maschinen 2,3,4 bereitgestellt werden müssen, z. B. Druckluft für die Maschinen 2 und 3.

Die Master-Steuerung 11 besteht im Wesentlichen aus fünf Modulen, die typischerweise als Software-Module zentral auf einem Mikrorechner realisiert sind. Dezentrale Strukturen sind dabei aber ebenfalls möglich, d. h. Verteilung auf mehrere miteinander kommunizierende Prozessor-Cores oder Einzelprozessoren. Die Master-Steuerung 11 hat eine Schnittstelle zu einem übergeordneten Produktionsplanungssystem 12 und zu den unterlagerten Maschinen 2,3,4 über die zuvor erwähnten Energie-Backbones 7,8,9 und über Steuerungs-Backbones 13, 14, 15, die über eine Master-Maschinen-Steuerung 16 angesteuert werden.

Die Master-Maschinen-Steuerung 16 enthält zunächst die klassische an sich bekannte Maschinensteuerungsfunktionalität, die den Ablauf der Fertigungslinie 1 steuert, d. h. die Synchronisation zwischen den einzelnen Maschinen 2,3,4. Sie ist vorzugsweise auch erweitert um Elemente zum sicheren Hoch- und Herunterfahren der Fertigungslinie 1, sogenannte Start-Stopp-Linienfunktionen. Diese sorgen dafür, dass der aktuelle Produktionsvorgang der Fertigungslinie 1 soweit zu Ende geführt wird, dass ein automatischer Wiederanlauf ohne manuelle Eingriffe möglich ist. Die Master-Maschinen-Steuerung 16 bildet also die fertigungstechnischen Abhängigkeiten zwischen den Maschinen 2,3,4 ab.

Die Master-Energie-Steuerung 10 steuert erfindungsgemäß die Energieversorgung der Fertigungslinie 1 und sorgt dafür, dass die Energie für die einzelnen Maschinen 2,3,4 definiert herunter- und hochgefahren wird, sodass nach dem Herunterfahren keine manuellen Eingriffe fürs Wiederhochfahren erforderlich sind. Die Master-Energie-Steuerung 10 bildet somit also die energietechnischen Abhängigkeiten zwischen den Maschinen 2,3,4 ab.

In der Master-Steuerung 11 befindet sich weiterhin eine Start-Stopp-Steuerung 17, die, während die Master-Maschinen-Steuerung 16 und die Master-Energie-Steuerung 10 die Abhängigkeiten bei Fertigungsprozessen bzw. Energieprozessen steuern, die Start-Stopp-Steuerung für den eigentlichen energieeffizienten Betrieb der Fertigungslinie 1 übernimmt. In ihr sind sämtliche Energiespar-Funktionalitäten für die betriebene Fertigungslinie 1 als Software-Makrofunktionen abgelegt, die aus einer definierten Abfolge von Funktionen für die Master-Maschinen-Steuerung 16 und die Master-Energie-Steuerung 10 bestehen und sorgt für die richtige Abfolge zwischen Energie- und Funktionsabschaltung bzw. -anschaltung. Die Master-Steuerung 11 enthält einen Timer 18, um Zeitkonstanten der Prozesse, wie Fertigung und Energieversorgung, berücksichtigen zu können. Alternativ können dabei auch sogenannte Acknowledge-Signale der untergeordneten Steuerungen 5,6 verwendet werden, die rückmelden, wenn bestimmte Prozesse abgeschlossen sind.

Weiterhin enthält die Master-Steuerung 11 einen Start-Stopp-Planer 19, der vom übergeordneten Produktionsplanungssystem 12 die Daten erhält, wann die Fertigungslinie 1 für bestimmte Fertigungsaufträge betrieben werden soll und berechnet aus den Pausenzeiten die Ab- und Wiederanschaltstrategie. Hierzu ist im einfachsten Fall im Start-Stopp-Planer 19 eine Tabelle hinterlegt, in der aufgeführt ist, für welche Pausenlänge welche Makro-Funktionen in der Start-Stopp-Steuerung 17 zu aktivieren sind. In weiterentwickelten Systemen können auch Modelle der Fertigungslinie 1 mit ihrem Energieverbrauch hinterlegt sein, sodass verschiedene Szenarien verglichen werden können bzw. über Optimierungsverfahren die optimale Start-Stopp-Strategie für die Fertigungslinie 1 berechnet werden können.

Außerdem ist noch ein hinlänglich bekannter Programm-Planer 20 in der Master-Steuerung 11 vorhanden, der die Fertigungsaufträge aus einem Produktionsplanungssystem an die passenden SPS- oder NC-Bearbeitungsprogramme in der Fertigungslinie 1 anpasst.

## Patentansprüche

1. Verfahren zur Steuerung einer Fertigungslinie (1) mit Bearbeitungseinheiten oder Maschinen (2,3,4), die über eine Master-Steuerung (11) mit von einem Produktionsplanungssystem (12) bereitgestellten Daten gesteuert werden,
wobei jede Maschine (2,3,4) zusätzlich zu einer Maschinensteuerung (5) eine Energiesteuerung (6) enthält, die von einer Master-Energie-Steuerung (10) als Bestandteil der Master-Steuerung (11) mit Daten versorgt wird, **dadurch gekennzeichnet,**
- **dass** die Master-Steuerung (11) mit einer Master-Maschinen-Steuerung (16) versehen ist, die um Funktionen zum Start und Stopp der Fertigungslinie (1) derart erweitert ist, dass ein aktueller Produktionsvorgang der Fertigungslinie (1) soweit zu Ende geführt wird, dass ein automatischer Wiederanlauf nach einem Stillstand der Fertigungslinie (1) durchführbar ist, und
- **dass** die Master-Maschinen-Steuerung (16) und/oder die Master-Energie-Steuerung (10) von einer Start-Stopp-Steuerung (17) gesteuert wird, wobei in der Start-Stopp-Steuerung (17) alle Parameter für einen energieeffizienten Betrieb der Fertigungslinie (1) hinsichtlich der Abfolge zwischen einer Energie- und Funktionsan- oder Funktionsabschaltung der Maschinen (2,3,4) hinterlegt sind, und
- **dass** die Start-Stopp-Steuerung (17) eine Restwärme-Funktion enthält, die Energien/Medien schon vor einem Stopp der Fertigungslinie (1) abschaltet, wenn die Energien/Medien so große Zeitkonstanten aufweisen, dass für eine verbliebene Restproduktionszeit noch ausreichend Energie vorhanden ist.

2. Verfahren nach Anspruch 1, **dadurch gekennzeichnet, dass** die Master-Energie-Steuerung (10) mit Funktionen zum Start und Stopp der Fertigungslinie (1) so ausgebildet ist, dass die Energie für die einzelnen Maschinen (2,3,4) definiert hoch - und heruntergefahren wird, sodass ein automatischer Wiederanlauf nach einem Stillstand der Fertigungslinie (1) durchführbar ist.

3. Verfahren nach Anspruch 1 oder 2, **dadurch gekennzeichnet, dass** die Master-Steuerung (11) und insbesondere die Start-Stopp-Steuerung (17) von einem Timer gesteuert wird und es ist ein Start-Stopp-Planer (19) vorhanden, der von dem Produktionsplanungssystem (12) die Daten zum Betrieb der Fertigungslinie (1) erhält und aus den Pausenzeiten eine Ab- und Anschaltstrategie ermittelt.

4. Verfahren nach Anspruch 3, **dadurch gekennzeichnet, dass** im Start-Stopp-Planer (19) eine Tabelle hinterlegt ist, die die Pausenlängen zwischen dem Ab- und Anschalten der Maschinen (2,3,4) der Fertigungslinie (1) enthält.

5. Anordnung zur Durchführung eines Verfahrens nach einem der vorhergehenden Ansprüche, **dadurch gekennzeichnet, dass** die Energie-Steuerungen (6) zur Steuerung von Medien, insbesondere Kühl- und/oder Schmiermittel, und Energie, insbesondere Druckluft und/oder Hydraulikdruck, ausgebildet sind.

6. Anordnung nach Anspruch 5, **dadurch gekennzeichnet, dass** zur Steuerung der Medien oder der Energie Absperrventile und/oder Regelbaugruppen angewendet werden.

7. Anordnung nach Anspruch 5 oder 6, **dadurch gekennzeichnet, dass** zumindest ein Teil der Bausteine zur Steuerung der Maschinen (2,3.4) über einen Feldbus oder über Ethernetverbindung mit Daten versorgbar sind.

8. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 4 oder zum Betrieb einer Anordnung nach einem der Ansprüche 5 bis 7.

## Claims

1. Method for controlling a production line (1) having processing units or machines (2, 3, 4) which are controlled via a master controller (11) using data provided by a production planning system (12), wherein, in addition to a machine controller (5), each machine (2, 3, 4) contains an energy controller (6) which is supplied with data by a master energy controller (10) as part of the master controller (11), **characterized**
- **in that** the master controller (11) is provided with a master machine controller (16) which is enhanced with functions for starting and stopping the production line (1) such that a current production process of the production line (1) is finished such that it is possible to carry out an automatic restart after a standstill of the production line (1), and
- **in that** the master machine controller (16) and/or the master energy controller (10) is/are controlled by a start/stop controller (17), the start/stop controller (17) storing all parameters for energy-efficient operation of the production line (1) in terms of the sequence between an energy and function connection or function disconnection of the machines (2, 3, 4), and
- **in that** the start/stop controller (17) contains a residual heat function which disconnects energies/media even before the production line (1) is stopped if the energies/media have such large time constants that there is still sufficient energy for a remaining production time.

2. Method according to Claim 1, **characterized in that** the master energy controller (10) is designed with functions for starting and stopping the production line (1) such that the energy for the individual machines (2, 3, 4) is increased and decreased in a defined manner, with the result that it is possible to carry out an automatic restart after a standstill of the production line (1).

3. Method according to Claim 1 or 2, **characterized in that** the master controller (11) and, in particular, the start/stop controller (17) are controlled by a timer, and there is a start/stop planner (19) which receives the data for operating the production line (1) from the production planning system (12) and determines a disconnection and connection strategy from the pauses.

4. Method according to Claim 3, **characterized in that** the start/stop planner (19) stores a table containing the pulse lengths between the disconnection and connection of the machines (2, 3, 4) of the production line (1).

5. Arrangement for carrying out a method according to one of the preceding claims, **characterized in that** the energy controllers (6) are designed to control media, in particular coolants and/or lubricants, and energy, in particular compressed air and/or hydraulic pressure.

6. Arrangement according to Claim 5, **characterized in that** shut-off valves and/or control assemblies are used to control the media or energy.

7. Arrangement according to Claim 5 or 6, **characterized in that** at least some of the modules for controlling the machines (2, 3, 4) can be supplied with data via a field bus or an Ethernet connection.

8. Computer program product stored on a computerusable medium, comprising computer-readable program means which, when the computer program product is executed on a microprocessor with associated storage means or on a computer, cause it to carry out a method according to one of Claims 1 to 4 or to operate an arrangement according to one of Claims 5 to 7.

## Revendications

1. Procédé de commande d'une ligne de fabrication (1) contenant des unités de traitement ou machines (2, 3, 4) commandées par des données délivrées par l'intermédiaire d'une commande-maître (11) par un système (12) de planification de production,
chaque machine (2, 3, 4) contenant en plus d'une commande de machine (5) une commande d'énergie (6) alimentée en données par une commande-maître d'énergie (10) qui fait partie de la commande-maître (11), **caractérisé en ce que**
la commande-maître (11) est dotée d'une commande-maître de machine (16) élargie à des fonctions de démarrage et d'arrêt de la ligne de fabrication (1), de telle sorte qu'une opération de production en cours sur la ligne de fabrication (1) est amenée à son extrémité jusqu'à ce qu'un redémarrage automatique puisse être exécuté après un arrêt de la ligne de fabrication (1),
**en ce que** la commande-maître de machine (16) et/ou la commande-maître d'énergie (10) sont commandées par une commande de marche-arrêt (17), tous les paramètres d'un fonctionnement efficace en termes d'énergie de la ligne de fabrication (1) étant conservés dans la commande de marche-arrêt (17) pour ce qui concerne la succession d'un branchement ou d'un débranchement d'énergie et d'un fonctionnement des machines (2, 3, 4) et
**en ce que** la commande de marche-arrêt (17) contient une fonction de chaleur résiduelle qui débranche les énergies et/ou fluides dès avant un arrêt de la ligne de fabrication (1) si les énergies et/ou fluides présentent des constantes de temps suffisamment grandes pour qu'une énergie suffisante soit encore disponible pour la durée de production qui reste.

2. Procédé selon la revendication 1, **caractérisé en ce que** la commande-maître d'énergie (10) est configurée avec des fonctions de démarrage et d'arrêt de la ligne de fabrication (1) de telle sorte que l'énergie pour les différentes machines (2, 3, 4) est augmentée et diminuée de manière définie pour qu'un redémarrage automatique puisse être exécuté après un arrêt de la ligne de fabrication (1).

3. Procédé selon les revendications 1 ou 2, **caractérisé en ce que** la commande-maître (11) et en particulier la commande de marche-arrêt (17) est commandée par une horloge et **en ce qu'**un planificateur (19) de marche-arrêt est prévu et reçoit du système (12) de planification de la production les données de fonctionnement de la ligne de fabrication (1) et détermine à partir des temps de pause une stratégie de débranchement et de rebranchement.

4. Procédé selon la revendication 3, **caractérisé en ce qu'**un tableau qui contient les durées de pause entre le débranchement et le branchement des machines (2, 3, 4) de la ligne de fabrication (1) est conservé dans le planificateur de marche-arrêt (19).

5. Ensemble en vue de la mise en oeuvre d'un procédé selon l'une des revendications précédentes, **caractérisé en ce que** les commandes d'énergie (6) sont configurées pour commander des fluides, en particulier des fluides de refroidissement et/ou des lubrifiants, et l'énergie, en particulier de l'air comprimé et/ou une pression hydraulique.

6. Ensemble selon la revendication 5, **caractérisé en ce que** des soupapes de blocage et/ou des modules de régulation sont utilisés pour commander les fluides ou l'énergie.

7. Ensemble selon les revendications 5 ou 6, **caractérisé en ce qu'**au moins une partie des modules de commande des machines (2, 3, 4) peuvent être alimentés en données par l'intermédiaire d'un bus de terrain ou d'une liaison Ethernet.

8. Produit de programme informatique conservé en mémoire sur un support utilisable par ordinateur et comprenant des moyens de programme lisibles par ordinateur qui, lors de l'exécution du produit de programme informatique sur un microprocesseur doté de moyens associés de mémoire ou sur un ordinateur, permettent à ces derniers de mettre en oeuvre un procédé selon l'une des revendications 1 à 4 ou de faire fonctionner un ensemble selon l'une des revendications 5 à 7.
